# EUROPEAN PATENT SPECIFICATION

(11) **EP 2 607 168 B1**
(45) Date of publication and mention of the grant of the patent: **30.08.2017**
(21) Application number: 12198736.6
(22) Date of filing: 20.12.2012
(51) Int. Cl.: B60Q 1/26, B60Q 1/04

(54) **Method of making a vehicle light and a related vehicle light**
Herstellungsverfahren für Fahrzeugleuchte und dazugehörige Fahrzeugleuchte
Procédé de production d'un feu de véhicule et un feu correspondant

(30) Priority: 23.12.2011 IT PD20110412
(43) Date of publication of application: 26.06.2013
(73) Proprietor: Automotive Lighting Italia S.p.A. A Socio Unico, 10078 Venaria Reale, (TO) (IT)
(72) Inventor: Marcori, Franco, I-10078 Venaria Reale, TORINO (IT); Herlin, Jean-Pascal, I-10078 Venaria Reale, TORINO (IT); Deneka, Marek, I-10078 Venaria Reale, TORINO (IT)
(74) Representative: Mitola, Marco

(56) References cited:
- WO-A1-2004/065171
- DE-A1- 10 121 114
- DE-A1-102004 053 742
- DE-A1-102005 046 793
- FR-A1- 2 730 684

## Description

The present invention relates to the method of making a vehicle light and a relative vehicle light, wherein the term vehicle light is understood to mean indifferently a rear vehicle light or a front vehicle light, the latter also known as a headlight.

As is known, a vehicle light, in its simplest form comprises a container body, a lenticular body and at least one light source.

The lenticular body is placed so as to close a mouth of the container body so as to form a housing chamber. The light source is arranged inside the housing chamber, which may be directed so as to emit light towards the lenticular body, when powered with electricity.

The container body comprises attachment/centring means of the light to the relative vehicle; typically such attachment/centring means comprise pins or pegs which are stuck and/or screwed into corresponding portions of the vehicle bodywork, such as, for example, seats or plates used for positioning and attaching the vehicle light.

The attachment/centring means are attached to the container body by means of screwing and/or snap-coupling means inside relative holes specially made on the container body.

The container body is usually made from plastic material, by moulding; the moulded body is fitted at the envisaged housing of the attachment/centring means, with cylindrical seats which, following the moulding must then be widened, brought within the tolerance value and if necessary threaded to permit the subsequent positioning of the attachment/centring means.

The widening operation of the seats, obtained by means of a drill tip and/or milling cutter, generates the formation of swarf or very long ribbons of moulded plastic partly on account of the fact that the body is made from plastic material.

In fact the plastic tends to fur up and the swarf does not break off as it would for example with some metal materials.

The plastic swarf tends to obstruct the seats obtained and in any case to soil the workplace even leading to possible jamming of the automatic drilling/boring systems. Such drilling/boring operations must be performed observing very strict tolerances given that the attachment/centring means also act as positioning means of the vehicle light inside the vehicle they are applied to; consequently imprecise positioning would cause unacceptable visible imperfections or significantly complicate the subsequent steps of assembling the light to the vehicle.

Solutions of the prior art exist which attempt to resolve such problem: for example it is known of to make so-called "ribbon-breaking" drill tips, geometrically shaped so as to favour the breaking and therefore fragmentation of the swarf.

Such tip solutions work preferably however when working on metal material but not so efficiently if used on plastic materials. Moreover, such tips are relatively expensive and therefore influence not slightly the final production cost of the vehicle light.
Document FR 2 730 684 A discloses a method of making a vehicle light comprising the steps of: preparing a container body for the light, the container body being shaped so as to define at least one housing chamber for at least one light source, said container body being made in plastic material by moulding, wherein following the moulding the container body comprises at least one attachment/centring portion provided with a hole destined to house an attachment/centring means for the light, said hole having a hole diameter and having an access end, the hole being defined by an inner lateral wall substantially cylindrical to a hole axis,
the method comprising the steps of : making at least one groove or recess in relation to said inner lateral wall, the groove being radially directed from the side opposite said hole axis so as to define a groove base diameter, said groove base diameter being measured in relation to said hole axis,
the method further comprising the step of inserting and fixing in said hole said attachment/centring means.

The purpose of the present invention is to overcome the drawbacks and limitations of the prior art, namely to make a vehicle light using an efficient and economical method, that is to say which ensures the required production tolerances, while at the same time limiting production times and costs.

Such purpose is achieved by a production method of a vehicle light according to claim 1, and by a relative vehicle light according to claim 14.

Other embodiments of the vehicle light according to the invention are described in the subsequent claims.

Further characteristics and advantages of the present invention will be more clearly comprehensible from the description given below of its preferred and non-limiting embodiments, wherein:

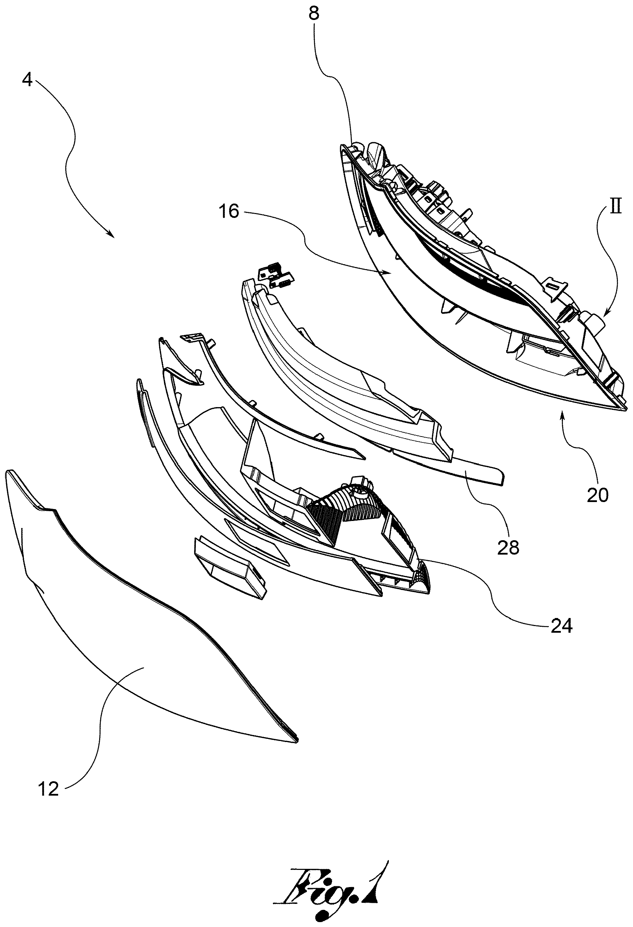

- figure 1 shows a perspective view in separate parts of a vehicle light according to one embodiment of the present invention;

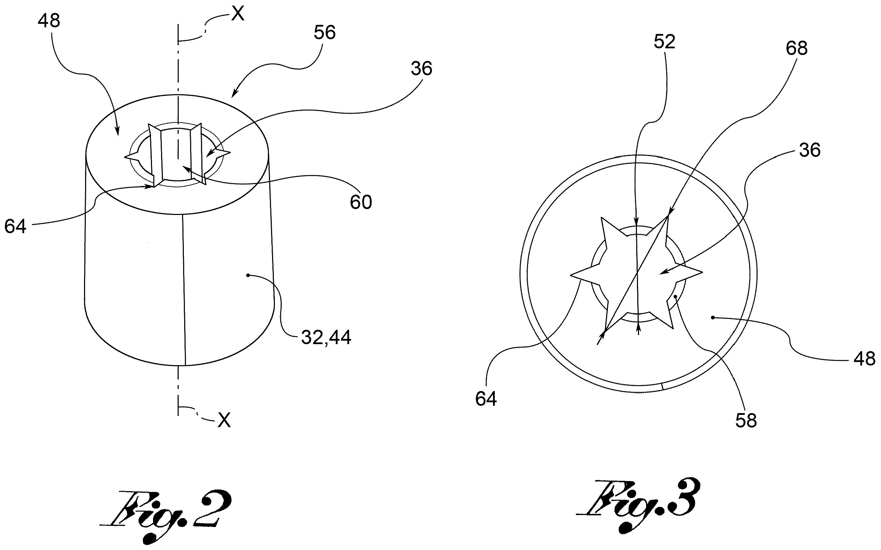

- figure 2 shows an enlargement of the part II in figure 1;
- figure 3 shows a ground view of the part in figure 2;
- figures 4-5 shows views of subsequent processing steps on the part in figure 2;
- figure 6 shows a perspective view of the part II in figure 1, wherein said part has been joined to an attachment/centring means.
- figure 7 shows a further ground view of the part II in figure 1.

The elements or parts of elements common to the embodiments described below will be indicated using the same reference numerals.

With reference to the aforementioned figures, reference numeral 4 globally denotes a vehicle light; the definition of vehicle light should be understood in its widest sense, comprising a front or rear vehicle light suitable for being used on any type of motor vehicle.

The vehicle light 4 comprises a container body 8, a lenticular body 12 and at least one light source.

The container body 8 comprises a mouth 20 through which it usually receives and contains the various components of the light 4; the container body 8 further permits the attachment of the light 4 to the relative vehicle.

The lenticular body is made from at least partially transparent, or semi-transparent or translucid material, and may also comprise an opaque portion.

The lenticular body 12 is placed so as to close the mouth 20 of the container body 8, so as to form a housing chamber 16 housing the light source.

Further components of the vehicle light 4 may, in addition, be placed inside the housing chamber 16, for example such as a reflector body 24 and a light guide body 28.

The container body 8 is usually made from a polymer material, such as, for example, polycarbonate (PC), polymethylmethacrylate (PMMA) (plexiglass), acrylonitrile butadiene styrene (ABS), APEC, or polypropylene (PP).

As mentioned above, the container body 8 is made in plastic material by means of injection moulding.

Following moulding, that is to say after coming out of the mould, the container body 8 comprises at least one attachment/centring portion 32 provided with a pre-hole 36 destined to house an attachment/centring means 40 for the vehicle light 4.

The attachment/centring portion 32 may comprise at least one protuberance 44 which projects from said container body 8 on the side opposite the housing chamber 16. The protuberance 44 preferably comprises a flattened portion 48 to facilitate the subsequent drilling operations.

Preferably, the protuberance 44 is provided with stiffening ribs: in fact the protuberance 44 is destined to house the attachment/centring means 40 and then, following assembly of the vehicle light 4 to the bodywork of the respective vehicle, is subject to mechanical stress due for example to the stress caused by inevitable misalignments with the seats of the bodywork and to vibrations during the use of the vehicle.

Said pre-hole 36 is preferably cylindrical and has an initial pre-hole diameter 52 and an access end 56.

Preferably, subsequent to moulding, the pre-hole 36 at the access end 56 has a guide chamfer 58 for guiding a widening tool, as described further below.

The pre-hole 52 is defined by an inner lateral wall 60 substantially cylindrical along a pre-hole axis X-X.

The pre-hole axis X-X is positioned according to the mould from which the container body is made.

The initial pre-hole diameter 36 is smaller than the final diameter to be obtained so as to be able to insert therein the attachment/centring means 40.

Advantageously, the method according to the invention comprises the step of making at least one groove or recess 64 in relation to said inner lateral wall 60; the groove 64 is radially directed on the side opposite said pre-hole axis X-X so as to define a groove base diameter 68.

The groove base diameter 68 being measured in relation to said pre-hole axis X-X.

Preferably, the at least one groove 64 is made directly in the moulding phase of the container body 8.

In other words, after moulding, the container body 8 is already fitted with attachment/centring portions 32 with pre-holes 36 having grooves 64.

Preferably, the grooves 64 have a longitudinal extension, parallel to the pre-hole axis X-X, substantially equal to the depth of insertion of the widening tool inside the pre-hole 36, as described further below.

According to one embodiment, the pre-hole 36 comprises at least two grooves 64 positioned diametrically opposite each other in relation to said pre-hole axis X-X.

According to a further embodiment, the pre-hole 36 comprises a plurality of grooves 64 positioned in an axial-symmetric manner in relation to said pre-hole axis X-X.

According to a preferred embodiment of the present invention said grooves 64 are all equal to each other and axial-symmetric to said pre-hole axis X-X.

The grooves 64 may have different geometries.

According to one embodiment, said grooves 64 present, in relation to a cross-section plane perpendicular to said pre-hole axis, a triangular profile which narrows as it moves away from the pre-hole axis X-X.

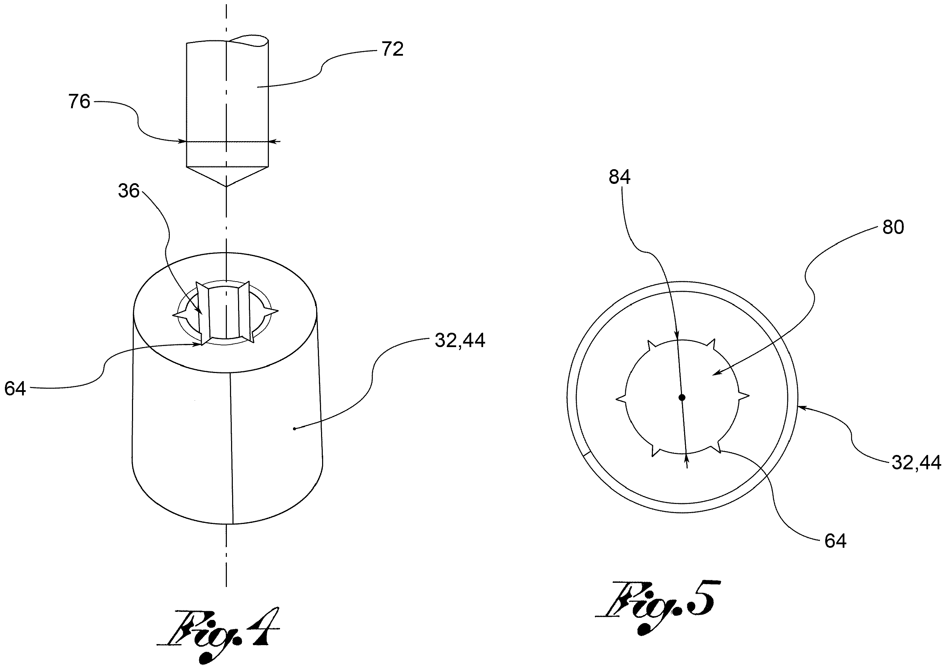

After obtaining the container body 8 by moulding, the step of widening said pre-hole 36 by means of a widening tool 72 inserted in said pre-hole 36 from the side of the access end 56 takes place, said widening tool 72 having a tool diameter 76 greater than the initial diameter of the pre-hole 52 (figure 4).

The widening tool 72 may be guided and centred in the pre-hole 36 thanks in part to the guide chamfer 58.

The widening tool 72 makes a final hole 80 defined by a final hole axis Y-Y and by a final hole diameter 84 equal to the tool diameter 76.

In other words, the final hole diameter 80 is obtained by means of a single passage of the tool in a working direction parallel to the pre-hole axis X-X and, consequently, the final hole diameter 84 is equal to the tool diameter 76.

The tool diameter 76 is predefined depending on the respective attachment means 40 to be inserted in the final hole 80.

The widening tool 72 may be for example a drill tip or a miller cutter. Preferably, in the case of a miller cutter, a miller cutter also fitted with front teeth is used.

Advantageously, the groove base diameter 68 is made so as to be greater than or equal to the tool diameter 76.

This way, in the case in which the final hole axis Y-Y is coaxial to or coincides with the pre-hole axis X-X, one has the certainty that the widening tool 72 always works on portions of protuberance at least partially interested by the pre-hole 36 and at least partially by a groove 64. This way, the swarf formed during the widening operation of the pre-hole will always meet at least one groove at which point it will tend to fragment and the formation of long ribbons of moulded plastic will be avoided.

Following the passage of the widening tool 72 it is possible to identify the vertexes of said grooves 64 (figure 5).

It should be stated in advance, that the moulding of the container body makes it possible to position the pre-holes 36 with the relative pre-hole axes X-X with a certain degree of precision or tolerance due above all to the shrinkage related to the cooling of the plastic material.

Consequently, given that the attachment/centring means may require extremely high degrees of positioning accuracy, the final position of the final hole axis Y-Y is not given by the moulding step but by the subsequent widening step.

In other words, the precise positioning of the final hole axis Y-Y is set by the machine tool which positions and makes the widening tool 72 advance inside the pre-hole 36.

Consequently, for the purposes of the final positioning of the final axis hole Y-Y, the pre-hole axis X-X obtained by moulding does not apply but the effective positioning of the widening tool which is controlled, preferably, by an NC machine.

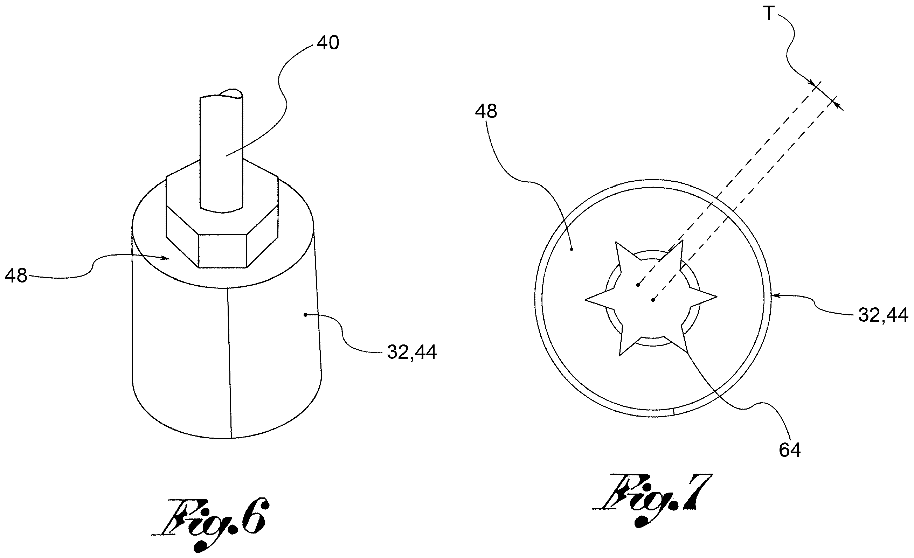

It follows that it is possible to define a maximum tolerance T for the position of said final hole axis Y-Y, said maximum tolerance T being the distance between the pre-hole axis X-X and the final hole axis Y-Y, such distance being measured perpendicular to said axes (figure 7.

The maximum tolerance T is therefore linked to the theoretical difference from the nominal value of the deviation of the pre-hole axis X-X due to the type of moulding, the type of material moulded, the geometrical and dimensional characteristics of the part being moulded and so forth.

Once the maximum tolerance value T has been accepted, the groove base diameter 68 is established so as to be greater than or equal to the sum of the tool diameter 76 plus double said maximum tolerance value T.

This way, one has the certainty that remaining within the predefined tolerance value T, during the step of processing with the widening tool 72, the widening tool 72 will always work on portions of protuberance 44 at least partially interested by the pre-hole 36 and by at least a groove 64. The swarf formed during the widening operation of the pre-hole 36 will always meet at least one groove at which point it will tend to fragment and the formation of long ribbons of moulded plastic will be avoided.

Following the widening operations of the pre-hole 36 it is possible to proceed with the step of inserting and fixing in said final hole 80 the attachment/centring means 40 (figure 6).

Such step may take place in various ways.

For example, it is possible to thread the final hole 80 internally so as to permit its subsequent screwing inside the attachment/centring means 40.

Moreover, it is possible to insert an attachment means of the self-tapping type.

It is also possible to envisage the step of driving the attachment/centring means 80 into the final hole 40 by interference.

As may be seen from the description, the method of making a vehicle light according to the invention makes it possible to overcome the drawbacks of the prior art presented.

In fact, it has been found that thanks to the drilling performed according to the present invention the formation of long ribbons of moulded plastic and the technical drawbacks related thereto are thereby avoided.

Problems of jamming of the machines are thereby avoided and processing accuracy is improved.

Moreover, high precision functioning at reduced costs is thereby achieved: in fact, the use of special drill tips which have a high running and maintenance cost, is not required and, in any case, production and processing times are not lengthened. In fact, it is possible to make the grooves during the moulding of the container body and a further processing step with respective additional machines, is therefore not required.

In any case, even in the case of not making the grooves during the moulding, it is possible to make them using said drilling machine whether a drill or miller cutter.

The grooves break the nucleus of material to be drilled and constitute a discontinuity able to fragment or break into pieces the swarf created during the drilling.

This way it is extremely easy to remove the swarf and prevent it from interfering with the subsequent insertion operations of the attachment means.

A person skilled in the art may make numerous modifications and variations to the methods described above so as to satisfy contingent and specific requirements, while remaining within the sphere of protection of the invention as defined by the following claims.

## Claims

1. Method of making a vehicle light (4) comprising the steps of:
- preparing a container body (8) for the light (4), the container body (8) being shaped so as to define at least one housing chamber (16) for at least one light source,
- said container body (8) being made in plastic material by moulding,
- wherein following the moulding the container body (8) comprises at least one attachment/centring portion (32) provided with a pre-hole (36) destined to house an attachment/centring means (40) for the light (4), said pre-hole (36) having an initial pre-hole diameter (52) and having an access end (56),
- the pre-hole (36) being defined by an inner lateral wall (60) substantially cylindrical to a pre-hole axis (X-X), the method comprising the steps of :
- making at least one groove or recess (64) in relation to said inner lateral wall (60), the groove (64) being radially directed from the side opposite said pre-hole axis (X-X) so as to define a groove base diameter (68), said groove base diameter (68), being measured in relation to said pre-hole axis (X-X),
- widening said pre-hole (36) by means of a widening tool (72) inserted in said pre-hole (36) from the side of the access end (56), said widening tool (72) having a tool diameter (76) greater than the initial diameter of the pre-hole (52),
wherein the widening tool (72) makes a final hole (80) defined by a final hole axis (Y-Y) and by a final hole diameter (84) equal to the tool diameter (76), the tool diameter (76) being predefined depending on the respective attachment/centring means (40) to be inserted in the final hole (80),
- wherein the groove base diameter (68) is made so as to be greater or equal to the tool diameter (76),
- the method further comprising the step of inserting and fixing in said final hole (80) said attachment/centring means (40).

2. Method according to claim 1, comprising the step of establishing a maximum tolerance (T) for the position of said final hole axis (Y-Y), said maximum tolerance (T) being the distance between the pre-hole axis (X-X) and the final hole axis (Y-Y), such distance being measured perpendicular to said axes,
wherein the groove base diameter (68) is established so as to be greater than or equal to the sum of the tool diameter (76)plus double said maximum tolerance value (T) .

3. Method according to claim 1 or 2, wherein the at least one groove (64) is made directly in the moulding phase of the container body (8).

4. Method according to any of the previous claims,
wherein the groove (64) has a longitudinal extension, parallel to the pre-hole axis (X-X), substantially equal to the depth of insertion of the widening tool (72) inside the pre-hole (36).

5. Method according to any of the previous claims,
wherein the pre-hole (36) comprises at least two grooves (64) positioned diametrically opposite to each other in relation to said pre-hole axis (X-X).

6. Method according to any of the previous claims,
wherein the pre-hole (36) comprises a plurality of grooves (64) positioned in an axial-symmetric manner in relation to said pre-hole axis (X-X).

7. Method according to claim 6, wherein said grooves (64) are all equal to each other and axial-symmetric to said pre-hole axis (X-X) .

8. Method according to any of the previous claims,
wherein said grooves (64) present, in relation to a cross-section plane perpendicular to said pre-hole axis, a triangular profile which narrows as it moves further away from the pre-hole axis (X-X).

9. Method according to any of the previous claims,
wherein following moulding the pre-hole (36) has a guide chamfer (58) at the access end (56),to guide the widening tool (72).

10. Method according to any of the previous claims,
wherein the widening tool (72) is a drill tip or milling cutter.

11. Method according to any of the previous claims,
wherein the centring/attachment portion (32) comprises at least one protuberance (44) which projects from said container body (8) on the side opposite the housing chamber (16).

12. Method according to any of the previous claims, comprising the step of threading the final hole (80) and screwing the attachment/centring means (40) inside it.

13. Method according to any of the previous claims, comprising the step of driving the attachment/centring means (80) into the final hole (40) by interference.

14. Vehicle light (4) made according to a method according to any of the previous claims.

## Patentansprüche

1. Verfahren zur Herstellung einer Fahrzeugleuchte (4), welches die Schritte aufweist:
- Bereitstellen eines Behälterkörpers (8) für die Leuchte (4), wobei der Behälterkörper (8) ausgestaltet ist, um zumindest eine Aufnahmekammer (16) für zumindest eine Lichtquelle zu definieren,
- wobei der Behälterkörper (8) in Kunststoffmaterial geformt ist,
- wobei nach dem Formen der Behälterkörper (8) zumindest einen Befestigungs-/Zentrierabschnitt (32) aufweist, der mit einem Vor-Loch (36) versehen ist, das dazu bestimmt ist, ein Befestigungs-/Zentriermittel (40) für die Leuchte (4) aufzunehmen, wobei das Vor-Loch (36) einen Anfangs-Vor-Loch-Durchmesser (52) aufweist und ein Zugangsende (56) aufweist,
- wobei das Vor-Loch (36) durch eine innere Seitenwand (60) definiert ist, die zu einer Vor-Loch-Achse (X-X) im Wesentlichen zylindrisch ist,
wobei das Verfahren die Schritte aufweist:
- Herstellen von zumindest einer Nut oder Vertiefung (64) in Bezug auf die innere Seitenwand (60), wobei die Nut (64) von der der Vor-Loch-Achse (X-X) gegenüberliegenden Seite radial ausgerichtet ist, um einen Nutbasisdurchmesser (68) zu definieren, wobei der Nutbasisdurchmesser (68) in Bezug auf die Vor-Loch-Achse (X-X) gemessen wird,
- Aufweiten des Vor-Lochs (36) mittels eines Aufweitungswerkzeugs (72), das von der Seite des Zugangsendes (56) in das Vor-Loch (36) eingesetzt wird, wobei das Aufweitungswerkzeug (72) einen größeren Werkzeugdurchmesser (76) hat als der Anfangs- Vor-Loch-Durchmesser (52),
wobei das Aufweitungswerkzeug (72) ein fertiges Loch (80) herstellt, das durch eine Fertiges-Loch-Achse (Y-Y) und durch einen Fertiges-Loch-Durchmesser (84) gleich dem Werkzeugdurchmesser (76) definiert ist, wobei der Werkzeugdurchmesser (76) in Abhängigkeit vom in das fertige Loch (80) einzusetzenden jeweiligen Befestigungs-/Zentriermittel (40) vordefiniert ist,
- wobei der Nutbasisdurchmesser (68) so gemacht ist, dass er größer oder gleich dem Werkzeugdurchmesser (76) ist,
wobei das Verfahren ferner den Schritt aufweist, das Befestigungs-/Zentriermittel (40) in das fertige Loch (80) einzusetzen und zu fixieren.

2. Verfahren nach Anspruch 1, das den Schritt aufweist, eine maximale Toleranz (T) für die Position der Fertiges-Loch-Achse (Y-Y) zu erstellen, wobei die maximale Toleranz (T) der Abstand zwischen der Vor-Loch-Achse (X-X) und der Fertiges-Loch-Achse (Y-Y) ist, wobei dieser Abstand senkrecht zur Achse gemessen wird, wobei der Nutbasisdurchmesser (68) so erstellt wird, dass er größer als oder gleich der Summe des Werkzeugdurchmessers (76) plus dem Doppelten des maximalen Toleranzwerts (T) ist.

3. Verfahren nach Anspruch 1 oder 2, wobei die zumindest eine Nut (64) direkt in der Formungsphase des Behälterkörpers (8) hergestellt wird.

4. Verfahren nach einem der vorhergehenden Ansprüche, wobei die Nut (64) eine zur Vor-Loch-Achse (X-X) parallele Längserstreckung hat, die im Wesentlichen gleich der Einsetztiefe des Aufweitungswerkzeugs (72) in das Vor-Loch (36) ist.

5. Verfahren nach einem der vorhergehenden Ansprüche, wobei das Vor-Loch (36) zumindest zwei Nuten (64) aufweist, die in Bezug auf die Vor-Loch-Achse (X-X) diametral einander entgegengesetzt angeordnet sind.

6. Verfahren nach einem der vorhergehenden Ansprüche, wobei das Vor-Loch (36) eine Mehrzahl von Nuten (64) aufweist, die in Bezug auf die Vor-Loch-Achse (X-X) axial symmetrisch angeordnet sind.

7. Verfahren nach Anspruch 6, wobei die Nuten (64) zueinander alle gleich und zur Vor-Loch-Achse (X-X) axial symmetrisch sind.

8. Verfahren nach einem der vorhergehenden Ansprüche, wobei die Nuten (64), in Bezug auf eine zur Vor-Loch-Achse senkrechte Querschnittsebene, ein dreieckiges Profil darstellen, das sich von der Vor-Loch-Achse (X-X) weggehend verengt.

9. Verfahren nach einem der vorhergehenden Ansprüche, wobei nach dem Formen das Vor-Loch (36) am Zugangsende (56) eine Führungsschräge (58) aufweist, um das Aufweitungswerkzeug (72) zu führen.

10. Verfahren nach einem der vorhergehenden Ansprüche, wobei das Aufweitungswerkzeug (72) eine Bohrerspitze oder ein Fräsmesser ist.

11. Verfahren nach einem der vorhergehenden Ansprüche, wobei der Befestigungs-/Zentrierabschnitt (32) zumindest einen Vorsprung (44) aufweist, der von dem Behälterkörper (8) an der der Aufnahmekammer (16) gegenüberliegenden Seite vorsteht.

12. Verfahren nach einem der vorhergehenden Ansprüche, das den Schritt aufweist, das fertige Loch (80) mit einem Gewinde zu versehen und das Befestigungs-/Zentriermittel (40) in es hineinzuschrauben.

13. Verfahren nach einem der vorhergehenden Ansprüche, das den Schritt aufweist, das Befestigungs-/Zentriermittel (80) durch Pressung in das fertige Loch (40) zu treiben.

14. Fahrzeugleuchte (4), die nach einem Verfahren nach einem der vorhergehenden Ansprüche hergestellt ist.

## Revendications

1. Procédé de production d'un feu de véhicule (4) comprenant les étapes :
- de préparation d'un corps de contenant (8) pour le feu (4), le corps de contenant (8) étant formé de sorte à définir au moins une chambre de logement (16) pour au moins une source de lumière,
- ledit corps de contenant (8) étant réalisé en matériau plastique par moulage,
- dans lequel suite au moulage, le corps de contenant (8) comprend au moins une partie d'attache / de centrage (32) dotée d'un prétrou (36) destiné à loger un moyen d'attache / de centrage (40) pour le feu (4), ledit prétrou (36) présentant un diamètre de prétrou initial (52) et présentant une extrémité d'accès (56),
- le prétrou (36) étant défini par une paroi latérale intérieure (60) sensiblement cylindrique à un axe de prétrou (X-X), le procédé comprenant les étapes :
- de production d'au moins une rainure ou un évidement (64) par rapport à ladite paroi latérale intérieure (60), la rainure (64) étant radialement dirigée du côté opposé audit axe de prétrou (X-X) de sorte à définir un diamètre de base de rainure (68), ledit diamètre de base de rainure (68) étant mesuré par rapport audit axe de prétrou (X-X),
- d'élargissement dudit prétrou (36) à l'aide d'un outil d'élargissement (72) inséré dans ledit prétrou (36) depuis le côté de l'extrémité d'accès (56), ledit outil d'élargissement (72) présentant un diamètre de trou (76) supérieur au diamètre initial du prétrou (52),
dans lequel l'outil d'élargissement (72) réalise un trou final (80) défini par un axe de trou final (Y-Y) et par un diamètre de trou final (84) égal au diamètre d'outil (76), le diamètre d'outil (76) étant prédéfini selon le moyen d'attache / de centrage (40) respectif à insérer dans le trou final (80),
- dans lequel le diamètre de base de rainure (68) est réalisé de sorte à être supérieur ou égal au diamètre d'outil (76),
- le procédé comprenant en outre l'étape d'insertion et de fixation dans ledit trou final (80) dudit moyen d'attache / de centrage (40).

2. Procédé selon la revendication 1, comprenant l'étape d'établissement d'une tolérance maximum (T) pour la position dudit axe de trou final (Y-Y), ladite tolérance maximum (T) étant la distance entre l'axe de prétrou (X-X) et l'axe de trou final (Y-Y), une telle distance étant mesurée perpendiculairement auxdits axes,
dans lequel le diamètre de base de rainure (68) est établi de sorte à être supérieur ou égal à la somme du diamètre d'outil (76) plus le double de ladite valeur de tolérance maximum (T).

3. Procédé selon la revendication 1 ou 2, dans lequel l'au moins une rainure (64) est directement réalisée dans la phase de moulage du corps de contenant (8).

4. Procédé selon l'une quelconque des revendications précédentes, dans lequel la rainure (64) présente une extension longitudinale, parallèle à l'axe de prétrou (X-X), sensiblement égale à la profondeur d'insertion de l'outil d'élargissement (72) dans le prétrou (36).

5. Procédé selon l'une quelconque des revendications précédentes, dans lequel le prétrou (36) comprend au moins deux rainures (64) positionnées de manière diamétralement opposée l'une à l'autre par rapport audit axe de prétrou (X-X).

6. Procédé selon l'une quelconque des revendications précédentes, dans lequel le prétrou (36) comprend une pluralité de rainures (64) positionnée de manière axialement symétrique par rapport audit axe de prétrou (X-X).

7. Procédé selon la revendication 6, dans lequel lesdites rainures (64) sont toutes égales les unes aux autres et axialement symétriques audit axe de prétrou (X-X).

8. Procédé selon l'une quelconque des revendications précédentes, dans lequel lesdites rainures (64) présentent, par rapport à un plan de section transversale perpendiculaire audit axe de prétrou, un profil triangulaire qui se rétrécit lorsqu'il se déplace plus loin de l'axe de prétrou (X-X).

9. Procédé selon l'une quelconque des revendications précédentes, dans lequel suite au moulage le prétrou (36) présente un chanfrein de guidage (58) sur l'extrémité d'accès (56) pour guider l'outil d'élargissement (72).

10. Procédé selon l'une quelconque des revendications précédentes, dans lequel l'outil d'élargissement (72) est une pointe de foret ou une fraise.

11. Procédé selon l'une quelconque des revendications précédentes, dans lequel la partie de centrage / d'attache (32) comprend au moins une protubérance (44) qui fait saillie dudit corps de contenant (8) sur le côté opposé à la chambre de logement (16).

12. Procédé selon l'une quelconque des revendications précédentes, comprenant l'étape de filetage du trou final (80) et de vissage du moyen d'attache / de centrage (40) en lui.

13. Procédé selon l'une quelconque des revendications précédentes, comprenant l'étape d'entraînement du moyen d'attache / de centrage (80) dans le trou final (40) par interférence.

14. Feu de véhicule (4) réalisé selon un procédé selon l'une quelconque des revendications précédentes.
